# EUROPEAN PATENT APPLICATION

(11) **EP 4 421 009 A1**
(43) Date of publication of application: **28.08.2024**
(21) Application number: 24159073.6
(22) Date of filing: 22.02.2024
(51) Int. Cl.: B65G 54/02, B65G 47/71, B65G 47/08, B65G 15/44, B65G 19/02

(54) **AN APPARATUS AND METHOD FOR FORMING GROUPS OF PRODUCTS**

(30) Priority: 27.02.2023 IT 202300003501
(71) Applicant: Cavanna S.p.A., 28077 Prato Sesia (NO) (IT)
(72) Inventor: BROLLI, Elio, I-28077 Prato Sesia (Novara) (IT); ZANETTI, Corrado, I-28077 Prato Sesia (Novara) (IT); IOPPA, Lorenzo, I-28077 Prato Sesia (Novara) (IT)
(74) Representative: Marchitelli, Mauro

(57) **Abstract**

An apparatus for forming groups of products, comprising a plurality of runners (22) each of which has at least one seat (28) for a respective unit (4), wherein said runners (22) are movable independently from each other along a grouping path (B) which passes through a receiving station (21) and a releasing station (39), and wherein an inlet conveyor (10) is configured to insert each unit (4) into respective seats (28) of said runners (22) in the receiving station (21).

## Description

### Field of the invention

The present invention refers generally to the packaging sector and specifically relates to an apparatus and a method for forming groups of products, such as biscuits or the like, in a step prior to packaging.

More precisely, the invention concerns an apparatus and a method for forming groups of side-by-side products starting from a continuous flow of products aligned together in an array.

### Description of the prior art

In the field of packaging food products, in particular biscuits or the like, the products to be packaged are often fed towards a packaging machine via a conveyor along which the products are aligned with each other.

It is often required to package the products in groups made up of a plurality of units placed side-by-side with each other, wherein each unit is made up of a single product or a plurality of products stacked vertically together.

Typically, the products or stacks of products coming from, for example, an oven are initially fed along a single lane of an inlet conveyor, on which the products or stacks of products are arranged in an array. The need therefore arises to arrange the products or stacks of products side-by-side with each other in order to form groups of products or stacks of products to be packaged.

The prior art discloses that it is possible to arrange a second inlet conveyor, parallel to the first and initially empty, onto which the products or stacks of products transported by the first inlet conveyor are alternately pushed. Next, the second inlet conveyor is slowed down to laterally align the products or stacks of products with those on the first conveyor to create groups of two products or stacks of products. By adopting additional inlet conveyors, it is possible to form larger groups of products or stacks of products.

These operations are particularly delicate if the products are arranged in stacks. In fact, in this case the operations of pushing the stacks of products laterally and slowing down the inlet conveyors may expose the stacks of products to inertial actions which can cause the products to fall from the stacks.

### Object and summary of the invention

The object of the present invention is to provide an apparatus and a method for forming groups of products that overcome the problems of the prior art.

In particular, the object of the invention is to provide an apparatus and a method for forming groups of products which, starting from a single array of products or stacks of products, can form groups of products or stacks of products side-by-side with each other, avoiding the risk of compromising the integrity of the stacks of products.

According to the present invention, this object is achieved by an apparatus and a method for forming groups of products or stacks of products having the characteristics forming the subject of claims 1 and 9.

The claims form an integral part of the disclosure provided here in relation to the invention.

### Brief description of the drawings

The present invention will now be described in detail with reference to the attached drawings, given purely by way of non-limiting example, wherein:
- Figure 1 is a perspective view of an apparatus for forming groups of products according to the present invention associated with a packaging machine;
- Figure 2 is a perspective view on a larger scale of the detail indicated by the arrow II in Figure 1;
- Figures 3A and 3B are views on a larger scale of the detail indicated by the arrow III in Figure 1 in two operational steps; and
- Figure 4 is a plan view of the part indicated by the arrow IV in Figure 1.

### Detailed description

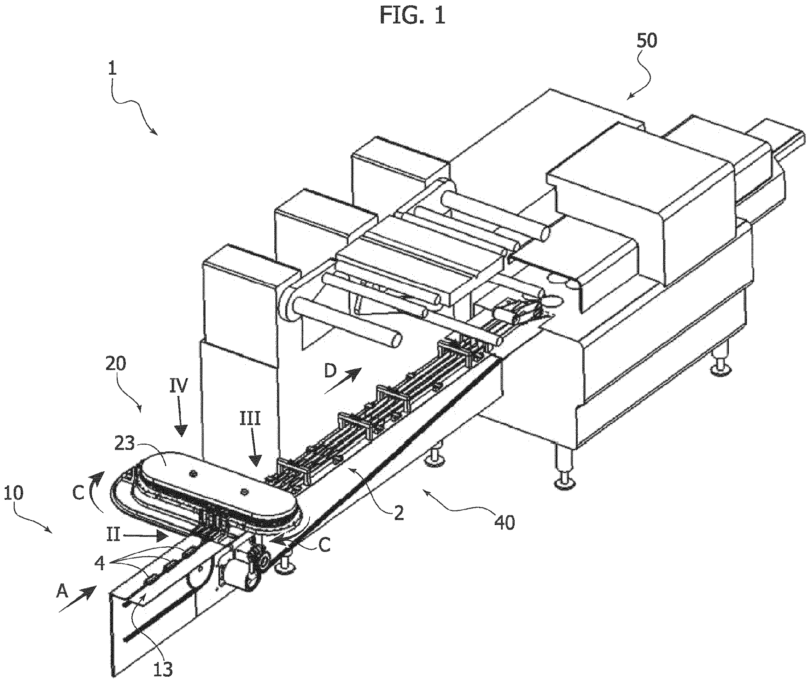

With reference to Figure 1, numeral 1 indicates an apparatus for forming groups of units 4 to be fed to a packaging machine 50, for example, a flow-pack packaging machine.

In the present description and the claims, it is understood that each unit 4 may be formed by a single product P or by a stack S formed by a plurality of products P stacked together vertically.

The term "group", indicated by 2, refers to a plurality of units 4 placed side-by-side together.

The apparatus 1 comprises an inlet conveyor 10, a grouping device 20 and a feeding conveyor 40.

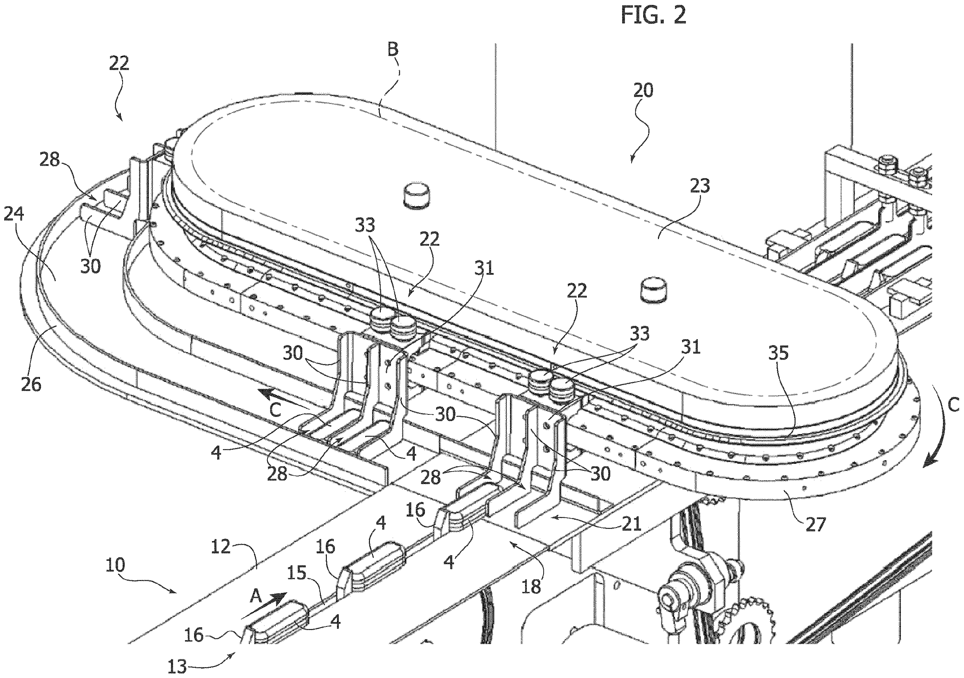

With reference to Figures 1 and 2, the inlet conveyor 10 extends along a transport direction A towards an unloading station 18. The inlet conveyor 10 is configured to feed an array 13 of units 4 aligned with each other along the transport direction A.

The inlet conveyor 10 comprises a stationary sliding surface 12 that supports the array 13 of units 4, and a plurality of pushers 16. The inlet conveyor 10 may comprise two guide walls parallel to each other (not shown) which laterally guide the array 13 during its movement in the transport direction A.

The pushers 16 are fixed to a motorized chain (not shown) and extend in a direction perpendicular to the sliding surface 12. The pushers 16 protrude from the sliding surface 12 through a longitudinal slot 15.

During operation, the pushers 16 advance respective units 4 along the transport direction A on the sliding surface 12.

The side guide walls (not illustrated) arranged on opposite sides of the array 13, during transport avoid misalignments of the units 4 and, in the case wherein the units 4 are made up of stacks of products, relative movements between the products P of a stack S, due for example to inertial actions.

With reference to Figures 2, 3a, 3b and 4, the grouping device 20 has a receiving station 21, which faces the unloading station 18 of the inlet conveyor 10, and a release station 39.

The grouping device 20 comprises a plurality of runners 22 and a stationary grouping surface 24. The runners 22 have respective seats 28 configured to receive respective units 4 coming from the inlet conveyor 10. Each runner may have one or more seats 28. In the illustrated example, each runner has two seats 28. The seats 28 may be formed by a plurality of vertical side walls 30. Each pair of vertical side walls 30 holds a respective unit 4 laterally. The runners 22 are movable along a grouping path B which passes through the receiving station 21 and the releasing station 39 in a direction C. The grouping surface 24 extends along the same grouping path B from the receiving station 21 to the release station 39 and forms a sliding surface on which the units 4 moved by the runners 22 along the grouping path B rest.

In a preferred embodiment, the grouping device 20 comprises a linear motor 23, which comprises a stator 27 that extends along the grouping path B, a plurality of movers 31, each of which is fixed to a respective runner 22, and a control unit (not shown), which controls the movement of the individual runners 22 along the grouping path B independently of each other. In a preferred embodiment, the movers 31 of the linear motor 23 comprise respective permanent magnets. The runners 22 may be provided with wheels 33 which cooperate with a stationary guide 35.

The grouping device 20 further comprises a stationary guide wall 26 which extends along the grouping direction B and is configured to retain the units 4 in the respective seats 28 of the runners 22 in a direction perpendicular to the grouping direction B during the movement of the runners 22 along the grouping direction B.

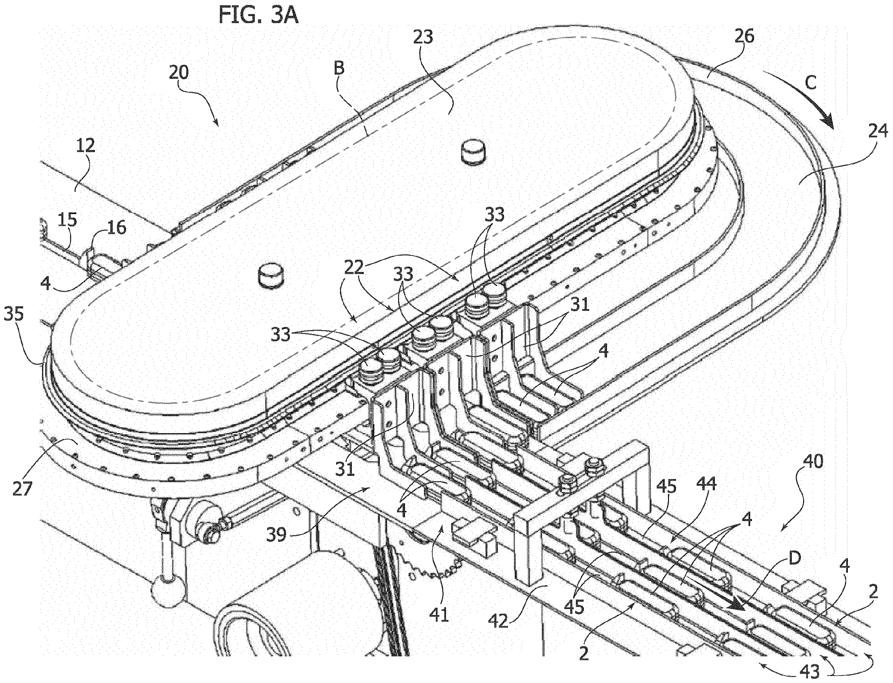

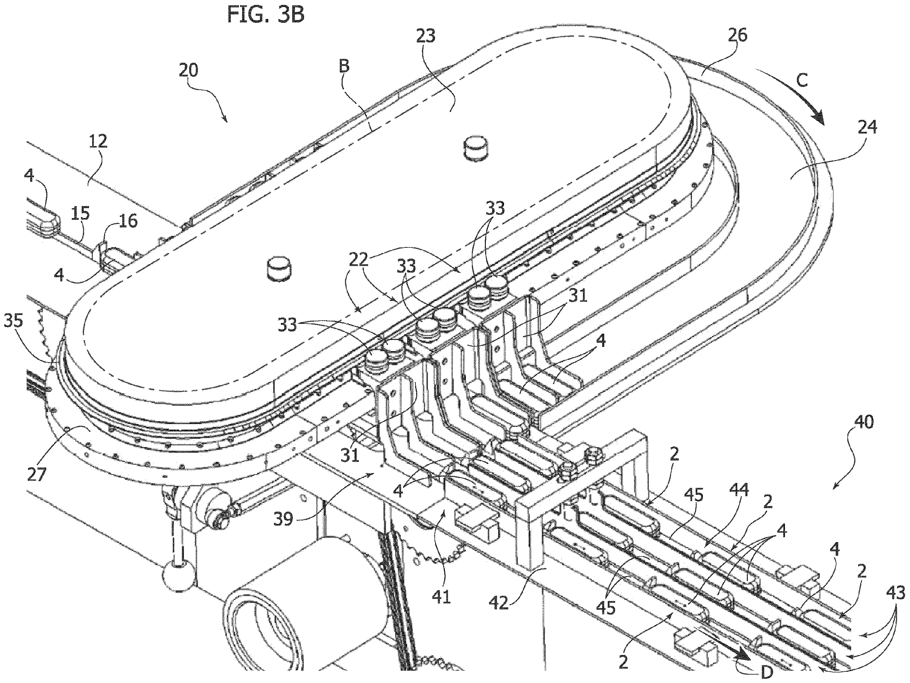

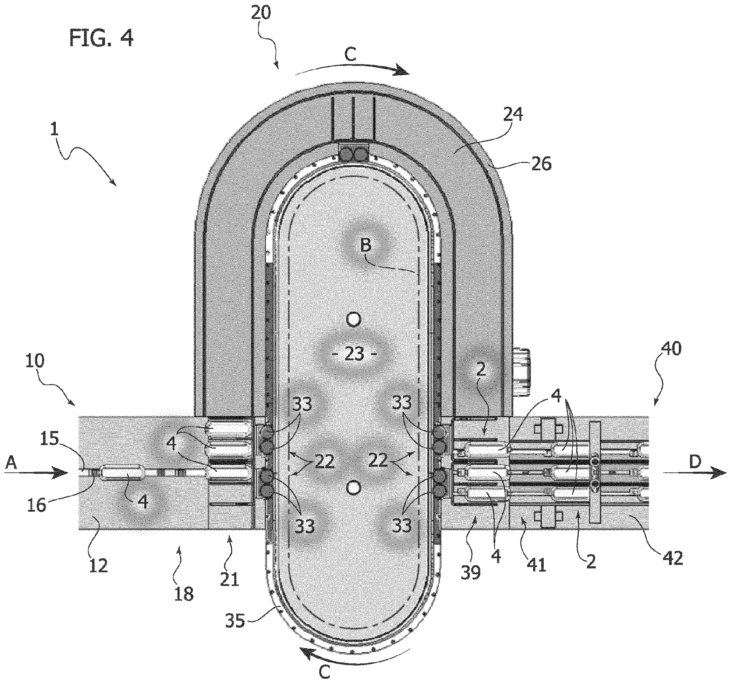

With reference to Figures 3a, 3b, 4, the feeding conveyor 40 has an inlet station 41, which faces the release station 39 of the grouping device 20, and extends along a feeding direction D towards the packaging machine 50.

The feeding conveyor 40 is configured to feed along a feeding direction D groups 2 formed at the outlet station 21 by a plurality of units 4 coming from the runners 22 of the grouping device 20.

The feeding conveyor 40 comprises a feeding surface 42, which includes a plurality of lanes 43 in a number equal to the units 4 constituting each group 2. The feeding conveyor 40 comprises a plurality of pushers 44 attached to a motorized chain (not shown). Each of the pushers 44 comprises a plurality of fingers placed side-by-side to each other. Each pusher 44 has a number of fingers equal to the number of units 4 constituting a group 2. The fingers of the pushers 44 protrude from the feeding surface 42 through respective longitudinal slots 45 which extend along respective lanes 43 of the feeding surface 42 in the feeding direction D. The pushers 44 are configured to advance respective groups 2 along the feeding direction D.

The feeding conveyor 40 may comprise a plurality of guide side walls (not shown) parallel to each other that extend along the feeding direction C and define respective lanes 43 of the feeding surface 42. The inlet conveyor 40 extends up to the inlet of the packaging machine 50.

With reference to Figures 1 to 4, the operation of the apparatus 1 is as follows.

With reference to Figures 2 and 3, the inlet conveyor 10 feeds the units 4, arranged aligned with each other in an array 13, moving them along the transport direction A. The movement of the units 4 takes place on the sliding surface 12 and is entrusted to the pushers 16.

The runners 22 of the grouping device 20 move in the grouping direction B and are selectively stopped at the receiving station 21.

When the units 4 advancing on the inlet conveyor 10 arrive at the unloading station 18, each unit 4 finds itself facing an empty seat 28 of a runner 22 located in a stationary position in the receiving station 21. In particular, an empty runner 22 is positioned so that the first of its seats 28 is aligned with the transport direction A.

The pushers 16 push the units 4 into respective empty seats 28 of the runner 22 located in the receiving station 21. Each unit 4 is pushed into a respective seat 28. After a runner 22 has received a unit 4 in one of its seats 28, the runner 22 moves along the direction C to carry an empty seat 28 into the receiving station 21.

The movement of the runners 22 in the receiving station 21 occurs intermittently so that the runner is in a stationary position during the step wherein a unit 4 is inserted into a respective seat 28. The movement of the inlet conveyor 10 in the transport direction A may be continuous.

When all the seats 28 of a runner 22 contain a respective unit 4, the runner is moved along the grouping direction B towards the release station 39, and a new runner 22, with respective empty seats 28, is moved towards the receiving station 21.

Since along the grouping path the units may undergo inertial actions, which may compromise the integrity of the units 4 when they include two or more stacked products P, the side walls 30 of the runners 22 and the stationary guide wall 26 hold the units 4 along the grouping path.

In a subsequent step, the runners 22 of the grouping device 20 are moved up to the release station 39, where they are stopped in a position in which the seats 28 of the runners 22 are aligned with respective lanes 43 of the feeding conveyor 40.

In the event that the number of seats 28 of each runner 22 is different from the number of lanes 43 of the feeding conveyor 40, a plurality of runners 22 are placed side-by-side in the release station 39 so that each lane 43 faces one respective seat 28.

Once the runners 22 are in a stationary position in the release station 39, a pusher 44 with a number of fingers equal to the number of units 4 of each group 2 extracts the units 4 from the seats 28 of the runners 22, pushing them towards the inlet station 41 of the feeding conveyor 40.

In this way, groups 2 are formed on the feeding conveyor 40, each including a plurality of units 4 placed side-by-side with each other. The number of units 4 in each group is equal to the number of fingers of each pusher 44 and the number of lanes 43 of the feeding conveyor 40.

After a group 2 is formed at the inlet station 41, the feeding conveyor 40 moves the group 2 along the feeding direction D towards the packaging machine 50.

Simultaneously with the advancement of the feeding conveyor 41, the runners 22, which had been stopped in the release station 39, are moved along the grouping direction B so as to leave the release station 39 free for the runners 22 which move the units 4 that form the next group 2.

In a preferred embodiment, the grouping path of the grouping device 20 is a closed path. In this way, the empty runners 22 from which the units 4 have been extracted in the release station 39 may be moved towards the receiving station 21 in which they receive subsequent units 4.

In the example shown, the grouping path has two parallel straight sections joined by two semicircular sections. The receiving station 21 and the releasing station 39 may be arranged, respectively, at the beginning and at the end of the two straight sections, with reference to the direction of movement of the runners 22 along the grouping path B.

Of course, without prejudice to the principle of the invention, the details of construction and the embodiments can be widely varied with respect to those described and illustrated, without thereby departing from the scope of the invention as defined by the claims that follow.

## Claims

1. An apparatus for forming groups of products, comprising:
- an inlet conveyor (10) configured to move an array (13) of units (14) aligned with each other along a transport direction (A) towards an outlet station (18),
- a grouping device (20) having a receiving station (21) facing said outlet station (18) of the inlet conveyor (10) and a release station (39), wherein the grouping device (20) comprises a plurality of runners (22), each of which has at least one seat (28) for a respective unit (4), wherein said runners (22) are movable independently from each other along a grouping path (B) which passes through said receiving station (21) and said release station (39), wherein said inlet conveyor (10) is configured to insert each of said units (4) inside respective seats (28) of the runners (22) at said receiving station (22),
- a feeding conveyor (40) having an inlet station (41) facing said release station (39) of the grouping device (20), wherein the feeding conveyor (40) is configured to extract from said seats (28) of said runners (22) at said release station (39) of the grouping device (20) a series of groups (2), each of which is formed by a plurality of units (4) side-by-side with respect to each other, and to feed said groups (2) along a feeding direction (D).

2. An apparatus according to claim 1, wherein said grouping device (20) comprises a linear motor (23) including a stator, which extends along said grouping path (B), and a plurality of movers (31), each of which is associated with a respective runner (22), and a control unit, which controls the movement of said runners (22) independently from each other along said grouping path (B).

3. An apparatus according to any of the preceding claims, wherein the inlet conveyor (10) comprises a sliding surface (12) on which said units (4) and a plurality of pushers (16) configured to advance said units (4) are supported along said transport direction (A) .

4. An apparatus according to any of the preceding claims, wherein the feeding conveyor (40) comprises a sliding surface and a plurality of pushers (44), each of which is configured to push, along said feeding direction (C), a group (2) formed by a plurality of units (4) side-by-side with respect to each other along a direction transversal to said feeding direction (C).

5. An apparatus according to claim 4, wherein each of said pushers (44) comprises a plurality of fingers configured to push respective units (4).

6. An apparatus according to any of the preceding claims, wherein each of said seats of the runners (22) has two side walls (30) configured to hold a respective unit (4) along said grouping direction (B)

7. An apparatus according to any of the preceding claims, wherein said grouping device (20) comprises a stationary guiding wall (26), which extends along the grouping direction (B), and which is configured to hold said units (4) inside respective seats (28) of the runners (22) along a direction orthogonal to said grouping direction (B) during the movement of the runners (22) along said grouping direction (B).

8. An apparatus according to any of the preceding claims, wherein said grouping path (B) is a closed path.

9. A method for forming groups of products to be fed to a packaging machine (50), comprising:
- moving towards an unloading station (18) an array (13) of units (4) aligned with each other along a transport direction (A);
- providing a plurality of runners (22) having respective seats (28) and movable independently from each other along a grouping path (B) which passes through a receiving station (21) and a release station (39),
- inserting said units (4) inside said receiving station (21) within respective seats (28) of said runners (22),
- moving said runners (22) containing respective units (4) along said grouping path (B) towards said release station (39);
- extracting from said seats (28) of said runners (22) at said release station (39) a series of groups (2), each of which is formed by a plurality of units (4) side-by-side with respect to each other, and feeding said groups (2) along a feeding direction (D).

10. A method according to claim 9, wherein a plurality of seats (28), in a number equal to the number of units (4) needed to form a group (2), is arranged at the release station (39).
